# EUROPEAN PATENT SPECIFICATION

(11) **EP 3 930 872 B1**
(45) Date of publication and mention of the grant of the patent: **30.08.2023**
(21) Application number: 20709687.6
(22) Date of filing: 28.02.2020
(51) Int. Cl.: B01D 46/00, B01D 46/24, B01D 46/52

(54) **FILTER CARTRIDGE AND CASING**
FILTERPATRONE UND GEHÄUSE
CARTOUCHE DE FILTRE ET BOÎTIER

(30) Priority: 28.02.2019 GB 201902706
(43) Date of publication of application: 05.01.2022
(73) Proprietor: PSI Global Ltd, Stockton-on-Tees TS22 5FE (GB)
(72) Inventor: HUNTER, Susanne Phyllis, Stockton on Tees TS22 5FE (GB); HUNTER, Daniel Stuart, Stockton on Tees TS22 5FE (GB); COCHRANE, Lloyd, Stockton on Tees TS22 5FE (GB)
(74) Representative: Lucas, Phillip Brian
(86) International application number: PCT/GB2020/050488
(87) International publication number: WO 2020/174251

(56) References cited:
- WO-A1-2019/123397
- CN-A- 107 050 961
- US-A1- 2014 021 124
- US-B2- 7 070 642

## Description

### FIELD OF THE INVENTION

This invention relates to a filter cartridge incorporating a casing e.g. for a filter/regulator (FR) or filter/regulator/lubricator (FRL) or for the removal of oil droplets or mist from an airstream, for example from an oil-lubricated compressor or vacuum pump. In the alternative it may incorporate oil vapour-absorbent activated carbon material.

### BACKGROUND TO THE INVENTION

Oil mist removal generally employs a coalescing filter. US-A-4130487 (Hunter) discloses a filter element for fluids useful as a coalescing layer in a coalescing filter and comprising at least one cylindrical sheet of nonwoven microporous fibrous filter material impregnated with a synthetic resin binder. The filter material consists of an amorphous mass of borosilicate glass fibres. In an embodiment, there are employed one or more cylindrical pleated sheets, e.g. two such sheets, consisting of microporous non-woven borosilicate glass fibres. The filter element may be bonded into end caps as is usual with pleated cylindrical filter elements. Other coalescing filters having coalescing and drainage layers are disclosed in US 5129923 (Hunter), US 6419721 (Hunter) and GB-A-2449846 (Spence). Such filter elements may be used, for example, in an oil coalescing filter for a rotary vane compressor or vacuum pump. Existing filter elements are multicomponent and include tubular filter media, inner and outer foraminous metal cylinders together defining a space for the filter media, top and bottom end caps and potting resin for securing the filter media and the metal cylinders to the end caps.

For removal of oil vapour from compressed air especially in applications such as the provision of purified breathing air and pneumatic instrumentation the final sorbent used may be activated carbon. To protect the sorbent from bulk liquid oil e.g. in the form of mist or droplets, a high efficiency oil removal filter typically using borosilicate glass microfibre with an efficiency of better than 99.999% as described above can be used immediately upstream. The arrangement can then be such that two pressure containing housings are used immediately adjacent to each other, the upstream one containing the ultra-high efficiency (UHE) filter element and the other the sorbent bed, see US 4559066 (Hunter et al.) Alternatively, a single housing can be used with two separate pressure containing chambers one above the other. Then the lower chamber contains the UHE filter element whereby re-classified oil aerosol is drained away by normal devices and the air then directed by an internal porting arrangement within the housing configuration into a sorbent containing cartridge in the upper chamber. In both cases replaceable cartridges can be used.

US2014/0211124 (Malgom) discloses a filter comprising a pleated hollow filter element and a cartridge housing which may be made of a metallic or polymer material. The housing comprises structural elements comprising outer and inner perforated cylindrical supports and end caps. An inner perforated core is integrally formed with the upper end cap and the outer perforated support is integrally formed with the opposite lower end cap. The two structural elements can be fixed by clip-on means, screwing, soldering, gluing or the like.

### SUMMARY OF THE INVENTION

The invention provides a filter cartridge comprising:
a casing comprising first and second end caps and outer and inner foraminous tubular members fitting one within the other and extending from one end cap to the other to define therebetween a space for a tubular filter element, wherein either the inner and outer foraminous tubular members are formed integrally with one of the first and second end caps or the outer foraminous tubular member is formed integrally with the first end cap and the inner foraminous tubular member is formed integrally with the second end cap, characerised in that:
the end caps and foraminous tubular members are of plastics material; and
a tubular filter element is located within the casing, ends of the filter element being adhered to the first and second end caps by a potting resin.

There is disclosed a simplified concept for a tubular filter element casing. Filter mesh cylinders of metal will be replaced by perforated plastic profiles incorporated into a first or top endcap design and/or a second or lower endcap. The outer cylinder may be an integral part of the first or second endcap. The inner cylinder may be be incorporated as part of a top or first endcap or a second or bottom endcap. This permits in-house injection moulding capabilities and allows a mechanical connection of the top and bottom endcaps or adhesion in place by rapid-setting potting resin.

There is also disclosed a casing for a filter cartridge comprising first and second end caps and outer and inner foraminous tubular members fitting one within the other and extending from one end cap to the other to define therebetween a space for a tubular filter element, wherein either the inner and outer foraminous tubular members are formed integrally with one of the first and second end caps or the outer foraminous tubular member is formed integrally with the first end cap and the inner foraminous tubular member is formed integrally with the second end cap, and the end caps and foraminous tubular members are of plastics material.

Coalescing/drainage media may be pleated or wrapped into the media pack and assembled into the new top and bottom endcap designs. Various rapid-curing potting resins may be used to seal the media at the top and bottom endcaps.

An oil-absorbent element may be of activated carbon granules formed into a column but is preferably of one or more pleated sheets of activated carbon fabric.

Other preferred features are defined in the accompanying claims to which attention is directed.

### BRIEF DESCRIPTION OF THE DRAWINGS

An embodiment of the invention will now be described, by way of example only with reference to the accompanying drawings in which similar elements are identified by the same reference numerals, and in which:
Fig. 1 is an exploded view of a first coalescing filter according to the invention;
Fig 2 is an isometric view of an end cap and tubular member forming part of the filter of Fig. 1;
Fig 3 is a sectional view of the filter in a plane perpendicular to the end caps;
Fig. 4 is an isometric view of an assembled filter;
Fig. 5 is a part sectional view of a second coalescing filter according to the invention; and
Figs 6a-6c show a third coalescing filter according to the invention, Fig 6a being a sectional view of a first end cap and outer tubular member, Fig. 6b being a sectional view of a second end cap and inner tubular member and Fig. 6c is a sectional view of the assembled cartridge.

### DETAILED DESCRIPTION OF PREFERRED EMBODIMENTS

As previously explained, some embodiments of the invention are applicable to filter cartridges for a filter/regulator (FR) or filter/regulator/lubricator (FRL). Air leaving a compressor is hot, dirty, and wet-which can damage and shorten the life of downstream equipment, such as valves and cylinders. Before air can be used it needs to be filtered. Airline filters remove contaminants from pneumatic systems, preventing damage to equipment and reducing production losses due to contaminant-related downtime. Such filters include coalescing filters whose purpose is to remove oil carryover from compressors. Most oil entrained in a compressed air stream, as well as some of the condensed water, will be in the form of mists or aerosols that can pass through the openings in standard airline filters. Air for instruments, spray painting, and bulk-material conveying frequently requires the removal of such droplets. Coalescing-type filters can accomplish this task. Aerosol carryover through such filters is commonly stated as parts per million (ppm) of oil vs. air by weight and will range from 1 to as little as 0.01 ppm. In compressed air systems, pressure regulators reduce and control fluid pressure to e.g. air tools, impact wrenches, blow guns, air gauging equipment, air cylinders, air bearings, air motors, spraying devices, fluidic systems, air logic valves, aerosol lubrication systems and many other fluid power applications. Many pneumatic system components and almost all pneumatic tools perform better when lubricated with oil. Injecting an oil mist into the air-stream which powers them can continuously lubricate valves, cylinders, and air motors for proper operation and long service life. Manufacturers frequently preassemble filters, regulators, and lubricators to form combination units in which they are packaged together as common body sizes with common connection port sizes. In some embodiments, the present invention provides a new casing structure for FR or FRL filters of the coalescing type, although the same structure may also be applicable to larger filters.

### Coalescing filters - internal elements

The filter element may incorporate a pleated or moulded coalescing filter layer.

Pleated coalescing layers of borosilicate are described, for example in US-A-4130487 (Hunter). That specification discloses a coalescing layer in a filter comprising at least one cylindrical sheet of nonwoven microporous fibrous filter material impregnated with a synthetic resin binder. The filter material may consist of an amorphous mass of borosilicate glass fibres. In an embodiment, there are employed one or more cylindrical pleated sheets, e.g. two such sheets, consisting of microporous non-woven borosilicate glass fibres, the fibres being held together with an organic binder, the glass fibres having 0.5 to 9.0 µm (inclusive) mean diameter and a length of between 1 and 2 mm (inclusive) and coarse fibres up to 6 mm length. The borosilicate glass material is further impregnated with a synthetic resin binder to enable it to withstand pressure loads when mounted, in smaller sized embodiments, between two simple perforate supporting cylinders. The synthetic resin binder is preferably silicone but alternative materials such as polyurethane, phenolic resin or epoxy resin may be used. In an embodiment, each layer in the filter material may advantageously be 0.73 mm thick and the basic fibre may be manufactured from pure borosilicate glass micro fibre of 0.5 µm mean diameter. The pleats are preferably packed quite closely together. Other specifications describing pleated layers are US 3505794 (Nutter et al.)*,* 4089783 (Holyoak, Crossland Filters) and US 4879929 (Tofsland, Nelson Ind.).

Molded coalescing layers of borosilicate are described e.g. in US 4303472 (Walker et al.) which discloses a method of forming a tubular filter element comprising the steps of mixing a slurry comprising fibers in a liquid, introducing said slurry into the top of an annular molding space, said molding space having an annular bottom which is liquid pervious and a vertical cylindrical side wall which is pervious to liquid over its effective open area, the effective open area of said cylindrical side wall being adapted to be varied by an imperforate cylindrical sleeve mounted in close sliding contact with said liquid pervious cylindrical side wall, said slurry presenting a surface which is free to receive applied pressure, applying pressure to said slurry surface whereby said liquid drains through said liquid pervious annular bottom and through the effective open area of said liquid pervious cylindrical side wall while fibers collect in a mass of increasing height upwardly from the bottom of said annular molding space, slidably moving said imperforate cylindrical sleeve upwardly to increase the available open area of said liquid pervious cylindrical side wall at a controlled rate as said fiber mass increases in height in said annular molding space, and removing said fiber mass from said molding space after said fibers have accumulated to a mass of desired height.

In a practical embodiment, the filter element comprises a mass of borosilicate glass micro fibres bounded by a foraminous outer support sheet or by foraminous inner and outer support sheets, with an open area of 45-70%. The borosilicate fibers are dispersed in water in a blending tank under mechanical agitation, and an acid, e.g. hydrochloric or sulfuric acid is added to give a pH of 2.9-3.1 at which the dispersion is stable, the fiber to water ratio being 0.01-0.5 wt %, typically 0.05 wt %. The resulting slurry is introduced into the molding space under a pressure of typically 290-480 Pa (6-10 p.s.i) and molded as described above. The sleeve is raised progressively at substantially the same rate as that at which the height of the fiber mass increases in order to maintain a flow of the dispersion to the point where the mass of fibers is building up, after which air may be passed through the molded element to reduce the content of residual water. The formed filter element is removed from the molding space, oven dried, resin impregnated and heated to harden the resin. As originally disclosed, the resin could be e.g. a silicone or an epoxy resin and could be impregnated in a solvent such as acetone, but it is now preferred that the resin should be a phenolic resin which may be impregnated as an aqueous solution. The fibers in a finished filter element produced by the above method are predominantly layered in planes perpendicular to the direction in which the dispersion flows into the molding space, and the same packing pattern arises throughout the range of forming pressures that can be used in practice. This non-random packing pattern results in a filter element that provides efficient depth filtration and has an advantageous combination of properties including high burst strength and low pressure drop. The molded tubular elements may be bonded to end caps to complete the formation of the filter and a drainage layer may be added.

Molded coalescing layers may also be made as described in US 8936456 (Hunter) involving the steps of:
(a) providing the foraminous tubular support which may be directed horizontally during the forming process;
(b) providing forming mesh over the curved surface of the foraminous tubular support and closing its ends against escape of fluid; and
(c) introducing fibrous slurry from a pressurized source into an annular molding space between a rotary molding torpedo and an inner surface of the foraminous tubular support, the molding torpedo having at least one channel for slurry opening along a curved surface thereof, fibers in the slurry collecting within the forming mesh to form the layer.

The microfibers may be e.g. inorganic fibers, in some embodiments glass microfibers and especially borosilicate glass microfibers. However, the fibers that can be molded are not limited to borosilicate glass microfibers, and include other water dispersible filter-forming fibers including polyester fibers, polyamide fibers, and other synthetic fibers and mixtures of borosilicate or other glass fibers with synthetic fibers. The dispersion may comprise water and microfibers or it may additionally comprise a resin. The microfibers are molded from aqueous dispersion. Stability of fiber dispersions in aqueous dispersion media can be pH dependent. Accurate control of the pH of the dispersion is desirable e.g. in the case of borosilicate fiber dispersions which are unstable and flocculate outside a narrow pH range and are also susceptible to damage by acid. For borosilicate microfibers the pH is desirably maintained at 2.9-3.0±0.1, otherwise the fibers form clumps which make molding more difficult and reduce the performance of the resulting filter. In embodiments, the fiber to water ratio is 0.01-0.5 wt %, e.g. 0.1 wt % (10 g/l). Resins that can be incorporated into the microfiber dispersion used in the molding process include phenol-free binders which are thermosetting acrylic acid-based resin binders which cure by crosslinking with a polyfunctional alcohol or other polyfunctional carboxyl-group reactive curing agent. U.S. Pat. No. 6,071,994 (Hummerich, assigned to BASF) discloses formaldehyde-free aqueous binder compositions which can be used as binders. One preferred resin that may be used is Acrodur DS 3530 (BASF) which is an aqueous solution of a modified polycarboxylic acid and a polyhydric alcohol as crosslinking component and as supplied has a solids content of 50 wt %, a pH of 2.5-4, a molecular weight of about 12,000 and a Brookfield viscosity at 23° C. of 150-300 mPa.s. A further more preferred resin is Acrodur 950 L (BASF) which is similar, but has a pH of 3.5, a molecular weight of about 80,000 and a Brookfield viscosity at 23° C. of 600-4000 mPa. s. A molded filter tube may be made using the process described above with borosilicate glass fibers dispersed at in water adjusted to pH 2.9-3.1 with added sulfuric acid and containing about 80 g/l Arcodur 950 L. In other embodiments the concentration of Acrodur or other water dispersible heat curable resin may be in the range 40-150 g/l and may be in the range of more than 80 g/l to 150 g/l. The fiber suspension in the acid/resin has similar molding characteristics to fiber/acid dispersion and is moldable. The molded filter tube is heated at 200°C. for 90 minutes to drive off water and cure the resin

The pleated or molded coalescing layer is normally used in combination with a downstream drainage layer. In some embodiments the drainage layer may be pleated with the coalescing layer. In other embodiments it may be a separate generally cylindrical structure in contact with the coalescing layer e.g. in the case of a pleated coalescing layer in contact with pleats of the coalescing layer. In particular, as described in GB-A-2449846 it may be a butt-welded tubular structure e.g. of non-woven polyamide or polyester with ends of the drainage layer welded together without overlap so that there is no "dead area" on the filter surface. The welded seam is stronger than stitched or glued alternatives and ensures a better fitting end-cap.

### Vapor removal elements - internal structure

EP-B-0081297 (Hunter et al.) describes a filter cartridge comprising an elongated rigid support tube extending between end caps and a single bed of sorbent material located within the support tube and arranged for the removal of molecular size contamination from a gas stream flowing from an inlet port in one of the closure members, said bed compactly extending over the full length between locations at or substantially at the end closure members and consisting of one closely packed mass of material in the form of a column which consists of activated carbon granules throughout the volume of the column. A tubular filter medium consisting of filter paper impregnated with finely divided activated carbon particles is arranged to intercept the gas stream as it flows from the column prior to its discharge from the cartridge. A wall defined by an inner tube or by a portion of the support tube contains at least a major portion of the sorbent bed along its length in the form of a column devoid of any free passage therethrough, the wall being impervious to the passage of gas therethrough so that flow takes place through the whole length of the bed longitudinally with respect to the central axis of the column from the inlet port to beyond the wall. The filter medium is arranged in series with the sorbent bed to receive the entire gas stream after it has been discharged from the sorbent bed beyond the wall, arrest any particulate material such as carryover from the sorbent bed and discharge the gas stream immediately from the cartridge, the filter medium being a tubular element through which gas flows radially outwards from the sorbent bed and is discharged radially from the filter medium. It is understood that use of filter cartridges with a column of activated carbon granules have remained standard practice for oil vapour removal from streams of compressed air.

### Coalescing filter embodiments

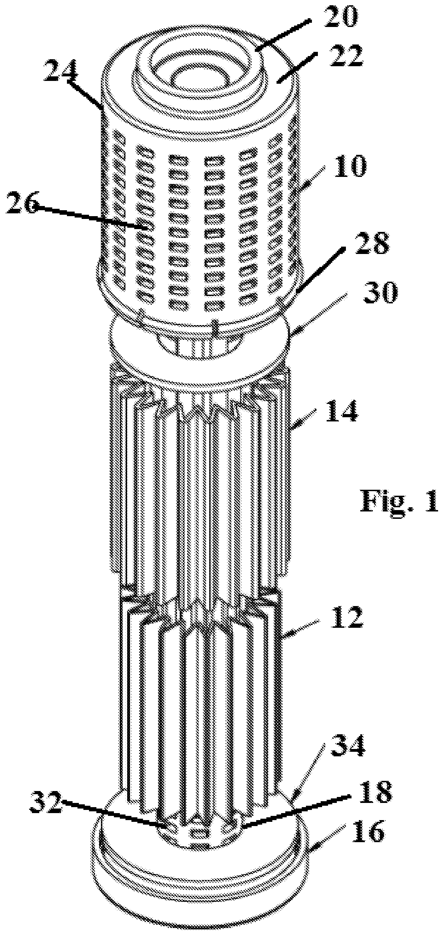

Fig. 1 is an exploded view of a first coalescing filter according to the invention which comprises a combined end cap and outer tubular member 10, a pleated media pack comprising a pleated tubular coalescing filter medium 12 and a pleated tubular drainage layer 14 surrounding and in contact with the filter medium 12 to which it may be bonded, and a combined second end cap 16 and inner tubular member 18. Many FRL applications are small in their nature which means often there is limited space to fit key components such as the coalescing/drainage element for aerosol applications. The applicants use pleated filter media for all in line and FRL applications and propose to incorporate the coalescing drainage media with the filter media as part of the sub-assembly process. This will allow more room during the overall assembly process. Sizes for the present filter may range upwardly from diameter about 35 mm and length 35-40mm.

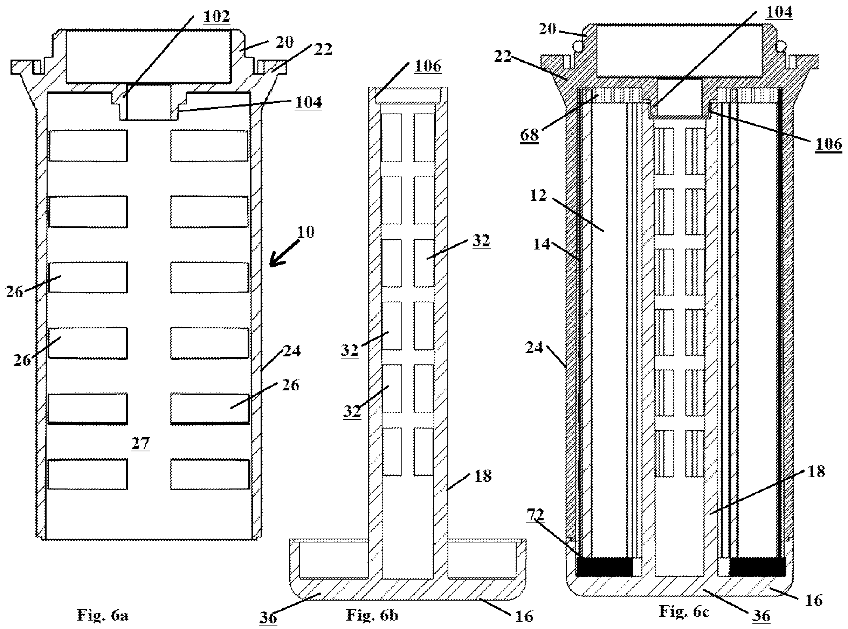

The combined member 10 is formed with an end cap region 22 having an outwardly-facing annular wall 20 defining an inlet for the filter, through which flow is intended to be in an in-to-out direction. The thickness of the annular wall may be similar to that of the end cap and may be e.g. about 0.25-0.5 mm. End cap region 22 joins outer tubular member 24 which is foraminous and formed with an array of perforations 26. It will be seen that in the disclosed embodiment the perforations 26 are generally rectangular with rounded corners and with their longer dimensions directed circumferentially. The perforations and their spacing are selected to provide the maximum open area consistent with necessary mechanical strength and rigidity and preferably together provide an open area not less than the 55% typical of existing walls of expanded metal. The perforations 26 are disposed in regular rows and columns aligned with the axis of the outer tubular member 24, each column being separated from its adjacent columns by axially directed pillars 27 (Fig. 6a) extending between the cap region 22 and the opposing end of the tubular member 24. An annular lip 28 is formed a short distance above the end of the tubular member 24. Internally of the wall 20 a continuation 44 of the end cap leads to a short tubular wall 46 facing towards the end cap 16, and an annular lip 48 is formed a short distance above the end of the tubular member wall 46.

The combined member 16 has a continuous end cap region 36 from which inner tubular member 18 formed with perforations 32 arises, the upper end of that member receiving tubular wall 46 and being formed with an annular recess 42 into which lip 48 fits to establish a mechanical connection between the members 10, 16. The further tubular member 38 arises from the periphery of the cap region 36 and receives the further end of tubular member 24, an internal annular recess 40 positioned a short distance from the end of the member 38 receiving lip 28 to establish a second mechanical connection between the members 10, 16. The perforations 26, 32 on the outer and inner cylindrical members allow air or other gas to pass into and through the filter and allows treated air to pass downstream of the filter, the perforations 32 providing a similar open area on the inner tubular member to that on the outer tubular member, and reducing so far as practical, flow resistance and pressure drop. A snap fit mechanical connection feature as described above allows easy assembly during the manufacturing process of the first and second endcaps and the tubular walls with which they are formed. Resin is also used to seal the media and the inner cylinder but the mechanical interface gives added support in application.

From the exploded view the assembly process has been significantly simplified by the new design of the top/bottom endcaps to incorporate the outer and inner cylinders 24, 26. The new assembly process is as follows:
- Sub assembly of coalescing filter media 12 (two sheets of borosilicate glass paper) and a drainage media sheet 14.
- Place rapid-curing polyurethane potting resin 34 into bottom endcap region 36.
- Seal complete media pack 12, 14 into the bottom endcap resin well.
- After the potting resin 34 has sufficiently cured (typically about 3 minutes) invert the endcap region 36 and media pack 12, 14.
- Place rapid curing polyurethane potting resin 30 into top endcap region 22.
- Connect mechanically top and bottom endcaps where the media pack 12, 14 will be sealed by the thixotropic potting resin 30, 34 at both ends.

The end cap regions 22,36 and tubular members 18,24 may be moulded, e.g. injection moulded, in an engineering plastics material e.g. ABS, polyamide, polycarbonate, polyethylene terephthalate (PET) or preferably polybutylene terephthalate (PBT) which is a semi-crystalline material. The engineering plastics material is preferably glass filled with a glass content of 10-60 wt%, e.g 20-40 wt%, in some embodiments about 30 wt%, and the filling either being fibres or beads. Incorporation of chopped glass fibres which are preferred increases flexural modulus, tensile strength and flexural strength. Glass bead-filled PBT is available from BASF under the trade name Ultradur B 4300 G3 (15% glass filled) or Ultradur S 4090 G6 (30% glass filled). PBT filled with glass fibres and beads is available from DuPont under the trade name Crastin. In alternative embodiments the end cap regions 22,36 and tubular members 18, 24 may be moulded in nylon 6.

The above-mentioned procedure is also suitable for a cylindrical molded coalescing layer in contact with a downstream drainage layer e.g. on its exterior surface, the drainage layer preferably being a cylindrical butt-welded non-woven structure as mentioned above. Ends of the coalescing layer and drainage layer are sealed to rapid-curing potting resin in the upper and lower end caps as in the previous embodiment

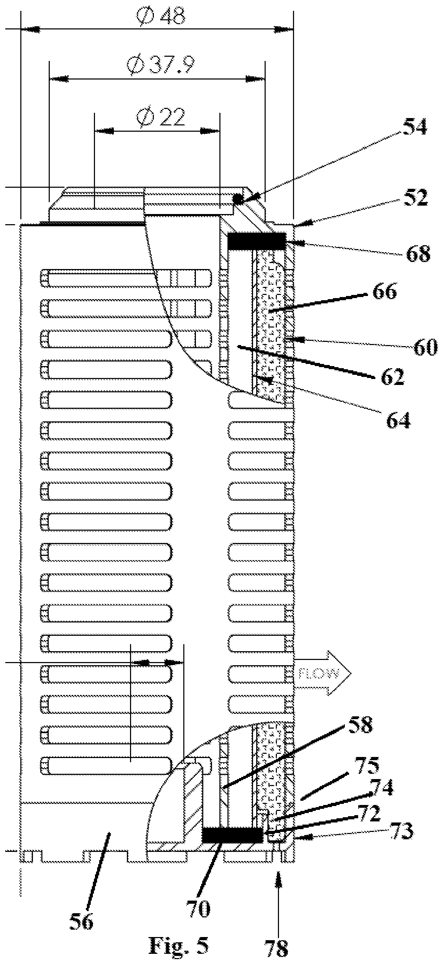

In Fig 5 there is shown a second embodiment of a coalescing filter having a drainage path from a drainage layer through a lower end cap as disclosed in EP-B-0618835 (Hunter). As before, Fig. 5 shows a tubular filter element for filtering out oil mist from a gas contaminated therewith and adapted to extend vertically downwards from the head of a filter housing. The element has an upper cap 52 of plastics material formed with a central aperture bounded by an O-ring 54 and a lower end cap 56 also of plastics material. An inner apertured tubular member 58 of plastics material which in this instance is formed integrally with upper end cap 52 to which it is secured by potting resin 68 extends downwardly towards lower end cap 56 to which it is secured by potting resin 70. The lower end cap is formed with an upturned flange 72 spaced inwardly from its upstanding outer wall 73, the flange 72 forming an outer boundary for the region of potting resin 70. An outer apertured tubular member 60 of plastics material which in this instance is also formed integrally with upper end cap 52 extends downwardly towards lower end cap 56 and meets the outer wall 73 at lap joint 75. A coalescing layer 62 of one or more borosilicate glass sheets whose thickness appears in the sectional view at 64 extends between the upper end cap to which it is secured by potting resin 68 and the lower end cap where it fits within flange 72 and is secured by potting resin 70, the coalescing layer fitting onto the inner apertured member 58 as shown. A tubular drainage layer 66 of butt-welded non-woven material fits between the coalescing layer 62 and the outer apertured member 60 and also extends between the upper and lower end caps 52, 56 as shown. It is secured at its upper end to end cap 52 by potting resin 68. Its lower end is spaced slightly from the coalescing layer and passed over the outer face of flange 72 with a region 74 fitting between flange 73 and outer wall 73. Drainage apertures 78 are formed in the lower end cap 56 in the region between flange 72 and outer wall 73 permitting coalesced liquid to flow to the lower end region 74 of the drainage layer and then as droplets through the apertures 78 whereby in use unacceptable build-up of oil in drainage layer 66 may be avoided and the height of any oil saturated band which may form at the lower region of the drainage layer 66 is reduced. Although this embodiment has been described with reference to pleated borosilicate glass sheet, it will be appreciated that the coalescing layer 62 may instead be of molded fibres e.g. borosilicate glass fibres e.g. molded by the method of either US 4303472 (Walker et al.) or US 8936456 (Hunter).

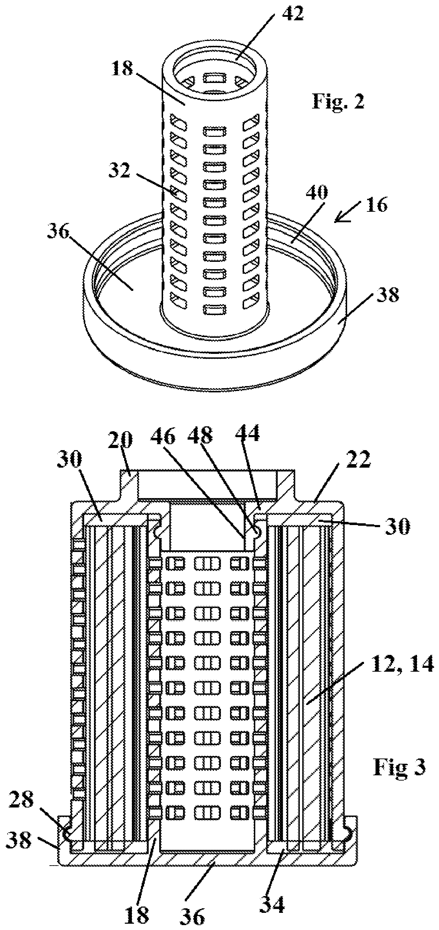

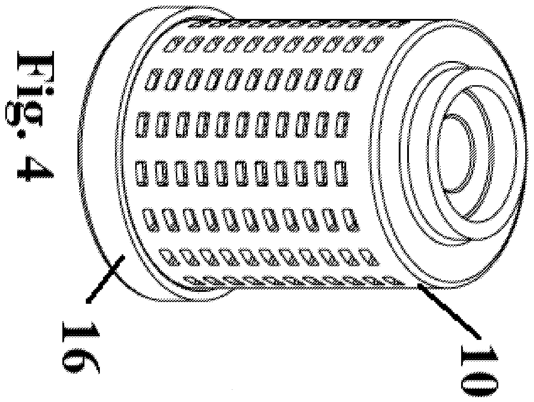

In summary, it is believed that the present two-part casing for a cartridge having a tubular filter element reduce the part count of the assembly and simplifies the manufacturing process. By incorporating the new first and second endcap designs both raw material and labour costs are also expected to be reduced. A further advantage e.g. in the embodiment of Figs 1-4 is that engagement of the wall 46 with the upper end of inner tubular member 18 and engagement of the lower end of outer tubular member 24 into tubular member 38 as shown not only provide concentricity for the end caps and tubular members but also assist concentricity for the filter elements 12, 14, similar concentricity being provided by the embodiment of Fig. 5, see the lap joint 75.

The embodiment of Figs 6a-6c is similar to that of Fig. 5 save that outer tubular member 24 forms part of first end cap 10 and inner tubular member 18 forms part of second end cap 16. The end cap 22 has a depending wall 102 formed at its lower end with an inward step 104 which fits concentrically into recess 106 at the upper end of inner tubular member 18. Region 36 of end cap16 is formed with upstanding wall 108 which is partially cut-away at its upper end to form inwardly-facing circumferential recess 110. The end of outer tubular member 14 furthest from end cap 22 is similarly cut-away to form outwardly-facing circumferential recess 112 having at its inner edge a short downwardly-facing annular rib 114. In the assembled cartridge of Fig 6c, the rib 114 engages into the recess 110, thereby forming a lap joint between walls 108 and 24 which holds the wall 24 firmly in concentric alignment with wall 108 and hence with the lower end cap. Thus, the top endcap mates 22 with the inner cylinder 18 with a step feature that ensures the element concentricity is maintained and reduces any variation in the assembly process. Similarly, the bottom endcap mates with the outer cylinder with a step feature. This ensures the element concentricity is maintained and reduces any variation in the assembly process. The process of manufacture may be achieved using an automated robotic glue dispenser that will ensure known fixed PU glue shot sizes for both endcaps which will significantly reduce variation during the assembly process.

Typically, oil mist or droplet removal may be achieved in a coalescing filter with solid particles down to 0.01µm and oil content down to 0.01 mg/m³. An embodiment of the filter of Fig. 6 has achieved carryover down to 0.0096 mg/m³ whereas the product of another manufacturer under similar conditions only achieves a carryover of about 0.039 mg/m³.

### Activated carbon embodiments

An activated carbon element for removal of hydrocarbon vapour may have a similar casing to that in any of the embodiments described above and assembled in the same manner. It may include a granulated carbon bed generally as described above. However, preferably it replaces pleated borosilicate cloth of a coalescing filter with pleated woven activated carbon cloth e.g. by 3x layers of 1/1 plain weave 100% activated woven carbon cloth (FM10) bonded on one side to a PE palatable backing material and supplied by Calgon Carbon under the trade name Flexzorb ^{™} (Chemviron Cloth Division, Rainton Bridge Industrial Estate, Houghton-le-Spring, Tyne & Wear DH4 5PP, UK) of surface density 360 g/m² and thickness 1.5 mm For background on carbon cloth see e.g. WO 01/15747 (Van Haute et al.) and US 4014725 (Schulz, Union Carbide). On the exterior of the pleated carbon cloth there may be provided a single pleated sheet of glass fibre material e.g. borosilicate microglass fibre and acrylic resin e.g. MFPS05ACTS available from AHLSTROM-MUNKSJÖ GROUP, basis weight 78 g/m² and thickness 0.5 mm. Compared to conventional adsorbent cartridges based on granulated carbon, cartridges based on pleated activated carbon cloth as described above combine low pressure drop with oil carry over orders of magnitude less than is achieved with granulated carbon.

## Claims

1. A filter cartridge comprising:
a casing comprising first and second end caps (22, 36) and outer and inner foraminous tubular members (24 ,18) fitting one within the other and extending from one end cap to the other to define therebetween a space for a tubular filter element (12, 14), wherein either the inner and outer foraminous tubular members (24, 18) are formed integrally with one of the first and second end caps (22, 36) or the outer foraminous tubular member (24) is formed integrally with the first end cap (22) and the inner foraminous tubular member (18) is formed integrally with the second end cap (36), characerised in that:
the end caps (22, 36) and foraminous tubular members (24, 18) are of plastics material; and
a tubular filter element (12, 14) is located within the casing, ends of the filter element being adhered to the first and second end caps by a potting resin.

2. The cartridge of claim 1, wherein the first end cap is apertured (20) for fluid flow into or from the filter.

3. The cartridge of claim 1 or 2, wherein the outer and inner tubular members are formed with an array of generally rectangular perforations (26, 32) disposed in rows and columns, with adjacent columns being separated by pillars extending between the end caps and aligned with an axis of the cartridge.

4. The cartridge of any preceding claim, wherein the first end cap is formed with a short tubular region (46) for fitting into an adjoining end of the inner tubular member.

5. The cartridge of claim 4, wherein the short tubular region is formed with an inward step (104) for locating in a corresponding recess (106) at the adjoining end of the inner tubular member whereby the first end cap and the adjoining end of the inner tubular member are maintained in a concentric relationship.

6. The cartridge of claim 4 or 5, wherein the second end cap is formed with an upstanding wall (73) that in the assembled casing meets the adjoining end of the outer tubular member (24), the upstanding wall is formed at its upper end with an inwardly facing circumferential recess, and the adjoining end of the outer tubular member is formed with an outwardly facing circumferential recess, said portions of said outwardly facing recess fitting into the inwardly facing recess in the assembled casing to define a lap joint (75) at which the outer tubular member (24) is located concentrically with the second end cap (36).

7. The cartridge of claim 4, having any of the following features:
(a) the short tubular region (46) and the adjoining end of the inner cylinder are configured for mechanical connection as they are assembled together, one of said short tubular region and adjoining end of said tubular member being formed with an annular flange (48) for push-fitting into a corresponding annular recess in the other of said short tubular region and adjoining end of said tubular member;
(b) the second end cap is formed with a short tubular region (38) for fitting around an adjoining end of the outer tubular member (24);
(c) the short tubular region (38) and the adjoining end of the outer cylinder are configured for mechanical connection as they are assembled together;
(d) one of said short tubular region and adjoining end of said outer tubular member is formed with an annular flange (28) for push-fitting into a corresponding annular recess in the other of said short tubular region and adjoining end of said outer tubular member.

8. The cartridge of any preceding claim, wherein the end caps (22,36) and tubular members (24, 18) are injection mouldings.

9. The cartridge of any preceding claim, having any of the following features:
(a) the end caps (22,36) and tubular members (24, 18) are of glass-filled engineering plastics, the glass content being 10-60 wt%;
(b) the glass content is 20-40 wt%;
(c) the glass content is about 30 wt%;
(d) the glass content is in the form of chopped fibres;
(e) the glass content is in the form of beads;
(f) the end caps and tubular members are of polybutylene terephthalate (PBT) or nylon.

10. The cartridge of any preceding claim, wherein the resin is based on a urethane polymer system.

11. The cartridge of any preceding claim, wherein the filter element comprises a coalescing filter element for removal of oil mist from a gas stream.

12. The cartridge of claim 11, having any of the following features:
(a) the filter element comprises a coalescing layer (12) and a drainage layer (14) for coalesced oil;
(b) the coalescing layer comprises borosilicate glass microfibres;
(c) the coalescing layer is pleated;
(d) the drainage layer is also pleated;
(e) the coalescing layer is a molding;
(f) the drainage layer is cylindrical and is of butt-welded non-woven fibres.

13. The cartridge of any of claims 1-10, wherein the filter element comprises activated carbon for removing oil vapour from a gas stream.

14. The cartridge of claim 13, wherein the filter element comprises pleated cloth of activated carbon.

## Patentansprüche

1. Filterpatrone, umfassend:
ein Gehäuse, das erste und zweite Endkappen (22, 36) und äußere und innere poröse Rohrglieder (24, 18), die ineinander passen und sich von einer Endkappe zu der anderen erstrecken, um dazwischen einen Raum für ein rohrförmiges Filterelement (12, 14) zu definieren, umfasst, wobei entweder die inneren und äußeren porösen Rohrglieder (24, 18) einstückig mit einer der ersten und zweiten Endkappen (22, 36) ausgebildet sind oder aber das äußere poröse Rohrglied (24) einstückig mit der ersten Endkappe (22) ausgebildet ist und das innere poröse Rohrglied (18) einstückig mit der zweiten Endkappe (36) ausgebildet ist, **dadurch gekennzeichnet, dass**:
die Endkappen (22, 36) und die porösen Rohrglieder (24, 18) aus einem Kunststoffmaterial ausgebildet sind, und
ein rohrförmiges Filterelement (12, 14) in dem Gehäuse angeordnet ist, wobei Enden des Filterelements an die ersten und zweiten Endkappen mittels eines Gießharzes geklebt sind.

2. Patrone nach Anspruch 1, wobei die erste Endkappe eine Öffnung (20) für einen Fluidfluss in oder aus dem Filter aufweist.

3. Patrone nach Anspruch 1 oder 2, wobei die äußeren oder inneren Rohrglieder mit einer Anordnung von allgemein rechteckigen Perforationen (26, 32), die in Reihen und Spalten angeordnet sind, ausgebildet sind, wobei benachbarte Spalten durch sich zwischen den Endkappen erstreckende und mit einer Achse der Patrone ausgerichtete Säulen getrennt werden.

4. Patrone nach einem der vorstehenden Ansprüche, wobei die erste Endkappe mit einem kurzen rohrförmigen Bereich (46) für das Passen in ein benachbartes Ende des inneren Rohrglieds ausgebildet ist.

5. Patrone nach Anspruch 4, wobei der kurze Rohrbereich mit einer nach innen gerichteten Stufe (104) für eine Positionierung in einer entsprechenden Vertiefung (106) an dem benachbarten Ende des inneren Rohrglieds ausgebildet ist, wobei die erste Endkappe und das benachbarte Ende des inneren Rohrglieds in einer konzentrischen Beziehung gehalten werden.

6. Patrone nach Anspruch 4 oder 5, wobei die zweite Endkappe mit einer aufrechten Wand (73) ausgebildet ist, die in dem montierten Gehäuse auf das benachbarte Ende des äußeren Rohrglieds (24) trifft, wobei die aufrechte Wand an ihrem oberen Ende mit einer nach innen gerichteten Umfangsvertiefung ausgebildet ist und wobei das benachbarte Ende des äußeren Rohrglieds mit einer nach außen gerichteten Umfangsvertiefung ausgebildet ist, wobei die Teile der nach außen gerichteten Vertiefung in die nach innen gerichtete Vertiefung in dem montierten Gehäuse passen, um eine Überlappungsverbindung (75) zu definieren, an welcher das äußere Rohrglied (24) konzentrisch mit der zweiten Endkappe (36) angeordnet ist.

7. Patrone nach Anspruch 4, die weiterhin beliebige der folgenden Merkmale aufweist:
(a) der kurze Rohrbereich (46) und das benachbarte Ende des inneren Zylinders sind konfiguriert für eine mechanische Verbindung, wenn sie aneinander montiert werden, wobei der kurze Rohrbereich oder das benachbarte Ende des Rohrglieds mit einem ringförmigen Flansch (48) für eine Presspassung in eine entsprechende ringförmige Vertiefung in dem jeweils anderen des kurzen Rohrbereichs und des benachbarten Endes des rohrförmigen Glieds ausgebildet ist,
(b) die zweite Endkappe ist mit einem kurzen Rohrbereich (38) für ein Passen um ein benachbartes Ende des äußeren Rohrglieds (24) herum ausgebildet,
(c) der kurze Rohrbereich (38) und das benachbarte Ende des äußeren Zylinders sind konfiguriert für eine mechanische Verbindung, wenn sie aneinander montiert werden,
(d) der kurze Rohrbereich oder das benachbarte Ende des äußeren Rohrglieds ist mit einem ringförmigen Flansch (28) für eine Presspassung in eine entsprechende ringförmige Vertiefung in dem jeweils anderen des kurzen Rohrbereichs und des benachbarten Endes des äußeren Rohrglieds ausgebildet.

8. Patrone nach einem der vorstehenden Ansprüche, wobei die Endkappen (22, 36) und die Rohrglieder (24, 18) Spritzgussteile sind.

9. Patrone nach einem der vorstehenden Ansprüche, die weiterhin beliebige der folgenden Merkmale aufweist:
(a) die Endkappen (22, 36) und die Rohrglieder (24, 18) bestehen aus einem glasgefüllten technischen Kunststoff, wobei der Glasanteil 10-60 Gew.-% beträgt,
(b) der Glasanteil 20-40 Gew.-% beträgt,
(c) der Glasanteil ungefähr 30 Gew.-% beträgt,
(d) der Glasanteil die Form von geschnittenen Fasern aufweist,
(e) der Glasanteil die Form von Perlen aufweist,
(f) die Endkappen und die Rohrglieder aus Polybutylenterephthalat (PBT) oder Nylon bestehen.

10. Patrone nach einem der vorstehenden Ansprüche, wobei das Kunstharz auf einem Urethanpolymersystem basiert.

11. Patrone nach einem der vorstehenden Ansprüche, wobei das Filterelement ein Koaleszenzfilterelement für die Entfernung eines Ölnebels aus einem Gasstrom umfasst.

12. Patrone nach Anspruch 11, die weiterhin beliebige der folgenden Merkmale aufweist:
(a) das Filterelement umfasst eine Koaleszenzschicht (12) und eine Drainageschicht (14) für koalesziertes Öl,
(b) die Koaleszenzschicht umfasst Borsilikatglas-Mikrofasern,
(c) die Koaleszenzschicht ist gefaltet,
(d) die Drainageschicht ist ebenfalls gefaltet.
(e) die Koaleszenzschicht ist ein Gussteil,
(f) die Drainageschicht ist zylindrisch und besteht aus stumpfgeschweißten nichtgewebten Fasern.

13. Patrone nach einem der Ansprüche 1 bis 10, wobei das Filterelement Aktivkohle für das Entfernen eines Ölnebels aus einem Gasstrom umfasst.

14. Patrone nach Anspruch 13, wobei das Filterelement ein gefaltetes Textil aus Aktivkohle umfasst.

## Revendications

1. Cartouche de filtre comprenant :
un boîtier comprenant des premier et second capuchons d'extrémité (22, 36) et des organes tubulaires foraminés externe et interne (24, 18) s'emboîtant l'un dans l'autre et s'étendant d'un capuchon d'extrémité à l'autre pour définir entre eux un espace pour un élément de filtre tubulaire (12, 14), dans laquelle soit les organes tubulaires foraminés interne et externe (24, 18) sont formés d'un seul tenant avec l'un des premier et second capuchons d'extrémité (22, 36) soit l'organe tubulaire foraminé externe (24) est formé d'un seul tenant avec le premier capuchon d'extrémité (22) et l'organe tubulaire foraminé interne (18) est formé d'un seul tenant avec le second capuchon d'extrémité (36), **caractérisée en ce que** :
les capuchons d'extrémité (22, 36) et les organes tubulaires foraminés (24, 18) sont en matière plastique ; et
un élément de filtre tubulaire (12, 14) est situé au sein du boîtier, des extrémités de l'élément de filtre étant collées aux premier et second capuchons d'extrémité par une résine d'enrobage.

2. Cartouche selon la revendication 1, dans laquelle le premier capuchon d'extrémité est ajouré (20) pour un écoulement de fluide dans ou à partir du filtre.

3. Cartouche selon la revendication 1 ou 2, dans laquelle les organes tubulaires externe et interne sont formés avec un ensemble de perforations généralement rectangulaires (26, 32) disposées en rangées et en colonnes, des colonnes adjacentes étant séparées par des piliers s'étendant entre les capuchons d'extrémité et alignés sur un axe de la cartouche.

4. Cartouche selon une quelconque revendication précédente, dans laquelle le premier capuchon d'extrémité est formé avec une région tubulaire courte (46) pour un emboîtement dans une extrémité attenante de l'organe tubulaire interne.

5. Cartouche selon la revendication 4, dans laquelle la région tubulaire courte est formée avec un gradin vers l'intérieur (104) pour un placement dans un évidement (106) correspondant à l'extrémité attenante de l'organe tubulaire interne moyennant quoi le premier capuchon d'extrémité et l'extrémité attenante de l'organe tubulaire interne sont maintenus dans une relation concentrique.

6. Cartouche selon la revendication 4 ou 5, dans laquelle le second capuchon d'extrémité est formé avec une paroi montante (73) qui, dans le boîtier assemblé, rencontre l'extrémité attenante de l'organe tubulaire externe (24), la paroi montante est formée à son extrémité supérieure avec un évidement circonférentiel tourné vers l'intérieur, et l'extrémité attenante de l'organe tubulaire externe est formée avec un évidement circonférentiel tourné vers l'extérieur, lesdites portions dudit évidement tourné vers l'extérieur s'emboîtant dans l'évidement tourné vers l'intérieur dans le boîtier assemblé pour définir un joint de recouvrement (75) au niveau duquel l'organe tubulaire externe (24) est situé de manière concentrique avec le second capuchon d'extrémité (36).

7. Cartouche selon la revendication 4, présentant l'une quelconque des particularités suivantes :
(a) la région tubulaire courte (46) et l'extrémité attenante du cylindre interne sont configurées pour un raccordement mécanique lorsqu'elles sont conjointement assemblées, l'une de ladite région tubulaire courte et de ladite extrémité attenante dudit organe tubulaire étant formée avec une bride annulaire (48) pour un emboîtement instantané dans un évidement annulaire correspondant dans l'autre de ladite région tubulaire courte et de ladite extrémité attenante dudit organe tubulaire ;
(b) le second capuchon d'extrémité est formé avec une région tubulaire courte (38) pour un emboîtement autour d'une extrémité attenante de l'organe tubulaire externe (24) ;
(c) la région tubulaire courte (38) et l'extrémité attenante du cylindre externe sont configurées pour un raccordement mécanique lorsqu'elles sont conjointement assemblées ;
(d) l'une de ladite région tubulaire courte et de ladite extrémité attenante dudit organe tubulaire externe est formée avec une bride annulaire (28) pour un emboîtement instantané dans un évidement annulaire correspondant dans l'autre de ladite région tubulaire courte et de ladite extrémité attenante dudit organe tubulaire externe.

8. Cartouche selon une quelconque revendication précédente, dans laquelle les capuchons d'extrémité (22, 36) et les organes tubulaires (24, 18) sont des pièces moulées par injection.

9. Cartouche selon une quelconque revendication précédente, présentant l'une quelconque des particularités suivantes :
(a) les capuchons d'extrémité (22, 36) et les organes tubulaires (24, 18) sont en plastique industriel chargé de verre, la teneur en verre étant de 10 à 60 % en poids ;
(b) la teneur en verre est de 20 à 40 % en poids ;
(c) la teneur en verre est d'environ 30 % en poids ;
(d) la teneur en verre se présente sous forme de fibres hachées ;
(e) la teneur en verre se présente sous forme de billes ;
(f) les capuchons d'extrémité et les organes tubulaires sont en téréphtalate de polybutylène (PBT) ou en nylon.

10. Cartouche selon une quelconque revendication précédente, dans laquelle la résine est basée sur un système polymère d'uréthane.

11. Cartouche selon une quelconque revendication précédente, dans laquelle l'élément de filtre comprend un élément de filtre coalescent pour l'élimination de brume d'huile d'un flux de gaz.

12. Cartouche selon la revendication 11, présentant l'une quelconque des particularités suivantes :
(a) l'élément de filtre comprend une couche coalescente (12) et une couche de drainage (14) pour l'huile coalescée ;
(b) la couche coalescente comprend des microfibres de verre borosilicaté ;
(c) la couche coalescente est plissée ;
(d) la couche de drainage est également plissée ;
(e) la couche coalescente est un moulage ;
(f) la couche de drainage est cylindrique et est constituée de fibres non tissées soudées bout à bout.

13. Cartouche selon l'une quelconque des revendications 1 à 10, dans laquelle l'élément de filtre comprend du charbon actif pour éliminer la vapeur d'huile d'un flux de gaz.

14. Cartouche selon la revendication 13, dans laquelle l'élément de filtre comprend un tissu plissé de charbon actif.
